(19) **Europäisches Patentamt / European Patent Office / Office européen des brevets**

(11) **EP 4 683 005 A1**

(12) **EUROPEAN PATENT APPLICATION**
published in accordance with Art. 153(4) EPC

(43) Date of publication:
**21.01.2026 Bulletin 2026/04**

(21) Application number: **24771004.9**

(22) Date of filing: **15.03.2024**

(51) International Patent Classification (IPC):
$H01M\ 4/86^{(2006.01)}$    $B01J\ 27/224^{(2006.01)}$
$B01J\ 37/08^{(2006.01)}$    $C01B\ 32/977^{(2017.01)}$
$H01M\ 4/88^{(2006.01)}$    $H01M\ 4/92^{(2006.01)}$
$H01M\ 4/96^{(2006.01)}$    $H01M\ 8/10^{(2016.01)}$

(52) Cooperative Patent Classification (CPC):
B01J 27/224; B01J 37/08; C01B 32/977;
H01M 4/86; H01M 4/88; H01M 4/92; H01M 4/96;
H01M 8/10; Y02E 60/50

(86) International application number:
**PCT/JP2024/010242**

(87) International publication number:
**WO 2024/190902 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.03.2023 JP 2023041007**

(71) Applicants:
• **DIC Corporation**
  **Tokyo 174-8520 (JP)**

• **University of Yamanashi**
  **Kofu-shi, Yamanashi 400-8510 (JP)**

(72) Inventors:
• **GOTO, Yusaku**
  **Sakura-shi, Chiba 285-8668 (JP)**
• **KATO, Shinji**
  **Sakura-shi, Chiba 285-8668 (JP)**
• **KAKINUMA, Katsuyoshi**
  **Kofu-shi, Yamanashi 400-8510 (JP)**

(74) Representative: **TBK**
  **Bavariaring 4-6**
  **80336 München (DE)**

(54) **ELECTRODE CATALYST CONTAINING POROUS SILICON CARBIDE COMPOSITE MATERIAL, ELECTRODE FOR ELECTRODE CATALYST, FUEL CELL, AND MANUFACTURING METHOD OF ELECTRODE CATALYST**

(57)    An electrode catalyst including a porous silicon carbide composite material containing silicon carbide (SiC) and a carbon material, particles containing a precious metal and being supported on the porous silicon carbide composite material, and a domain containing a silicon oxide and being formed in part of the porous silicon carbide composite material, in which the electrode catalyst has a BET specific surface area of 10 m²/g or more and an electrical conductivity of 0.1 S/cm or more.

EP 4 683 005 A1

**(Cont. next page)**

# FIG. 1

STEP (A)

ADDING ORGANIC ALKOXYSILANE TO ACIDIC AQUEOUS SOLUTION CONTAINING SURFACTANT AND PH ADJUSTOR, AND FURTHER ADDING CARBON MATERIAL (A) OR ORGANIC POLYMER TO CAUSE SOL-GEL REACTION OF ORGANIC ALKOXYSILANE, FORMING GEL CONTAINING CARBON MATERIAL (A) OR ORGANIC POLYMER

STEP (B)

CLEANING GEL WITH ALCOHOL

STEP (C-1)

DRYING CLEANED GEL TO FORM POROUS SILICON CARBIDE PRECURSOR

STEP (D-1)

CALCINING POROUS SILICON CARBIDE PRECURSOR

STEP (E-1)

MIXING DISPERSION COMPRISING COLLOID CONTAINING NOBLE METAL AND AQUEOUS HYDROGEN PEROXIDE SOLUTION WITH POROUS SILICON CARBIDE COMPOSITE MATERIAL TO OBTAIN MIXTURE AND TO FORM DOMAIN COMPRISING SILICON OXIDE IN PART OF POROUS SILICON CARBIDE COMPOSITE MATERIAL

## Description

TECHNICAL FIELD

The present invention relates to an electrode catalyst including a porous silicon carbide composite material, an electrode for an electrode catalyst, a fuel cell, and a method for producing the electrode catalyst.

The present application claims a priority from Japanese Patent Application No. 2023-041007 filed on March 15, 2023 in Japan, and cites the contents thereof.

BACKGROUND ART

A fuel cell is a device which generates electric power and heat by a chemical reaction of obtaining water from hydrogen and oxygen, and there are several types of fuel cells, such as a phosphoric acid fuel cell (PAFC), a molten carbonate fuel cell (MCFC), a solid oxide fuel cell (SOFC), and a polymer electrolyte fuel cell (PEFC). Of these, the polymer electrolyte fuel cell (PEFC) has such a structure that a solid polymer electrolyte membrane has an anode (fuel electrode) formed on one side thereof and a catalyst layer constituting a cathode (air electrode) formed on another side, and a gas diffusion layer is bonded to the outside surface of each catalyst layer. The catalyst layer is composed of a catalyst in a particle form containing a precious metal, and a catalyst supporting carrier having the catalyst highly dispersed and supported on the surface of nano-sized carrier particles.

Currently, a carbon material having high specific surface area and high electrical conductivity is used as a carrier for supporting a catalyst. For example, PTL 1 has a description of C/SiC composite particles including porous carbon particles having pores in which SiC particles are distributed on the inner wall surface of the pores, and shows that deterioration of the electrolyte is suppressed. On the other hand, the activity maintaining ratio (durability) of the catalyst is evaluated under low load conditions, and satisfactory studies about the durability of the catalyst under high load conditions are not made. Thus, there is still a serious problem in that the catalyst performance in the cathode and anode becomes poor due to corrosion of the carbon carrier and the like. For this reason, the development of a material having high specific surface area and high electrical conductivity as well as excellent durability as a substitute for carbon is strongly desired.

For example, PTL 2 discloses an electrode catalyst including (A) Group 13-doped SiC which is SiC doped with an element belonging to Group 13 (Group 3B) of the Periodic Table, (B) electrically conductive carbon particles, and (C) a precious metal supported on the surface of the Group 13-doped SiC (A). In this document, the element belonging to Group 13 for doping SiC is, for example, Al (aluminum), the amount of the doping element belonging to Group 13 in the Group 13-doped SiC (A) is 1 to 5 mol%, and the ratio of the Group 13-doped SiC (A) and the electrically conductive carbon particles (B) [(A):(B)] is 1:9 to 5:5, in terms of a weight ratio.

Further, PTL 3 discloses precious metal-supported silicon carbide particles including a silicon oxide layer on the surface of silicon carbide particles having an average primary particle diameter of 0.005 to 5 $\mu$m and having precious metal particles supported. The silicon carbide particles have a specific surface area of 1.0 to 400 $m^2/g$.

CITATION LIST

PATENT LITERATURE

PTL 1: JP2023-9699A
PTL 2: JP2010-149008A
PTL 3: JP2011-093756A

SUMMARY OF INVENTION

TECHNICAL PROBLEM

For achieving high efficiency and high power, the electrode for use in a fuel cell needs an electrode catalyst which satisfies both high specific surface area and high electrical conductivity and further has durability. As mentioned above, PTL 2 has a description about an electrode catalyst which contains silicon carbide particles having a precious metal supported on the surface thereof, and electrically conductive carbon particles, and thus which has electrical conductivity imparted thereto; however, there is no reference to the durability, and an improvement of the electrode catalyst is needed. Particularly, there is a need for an electrode catalyst capable of exhibiting high durability even in a start/stop cycle in an environment of a fuel cell under electricity generation conditions, in which the electrode catalyst is most likely to suffer deterioration.

PTL 3 has a description of precious metal-supported silicon carbide particles having a silicon oxide layer on the surface of silicon carbide having precious metal particles supported, but there is not a description that the silicon carbide particles are porous, and further there is no reference to the electrical conductivity.

An object of the present invention is to provide an electrode catalyst which not only achieves high electrical conductivity while maintaining large BET specific surface area, but also has excellent durability, and to provide a method for producing an electrode catalyst using an organic alkoxysilane which is of such a type that it is widely being on the market as an industrial raw material.

SOLUTION TO PROBLEM

For achieving the object, in the present invention, it has been found that a carbon material or an organic polymer, which is a carbon source, is permitted to be present in a sol-gel reaction of an aqueous solution of organic alkoxysilane conducted in the presence of a surfactant while taking care not to prevent formation of a porous gel, preparing a precursor gel, and the precursor gel is calcined, achieving production of a porous silicon carbide composite material having a nanoscale carbon material disposed in a three-dimensional structure skeleton, in which a pore structure (mesopores) in the mesoscopic region or a pore structure (macropores) in the macroscopic region has developed, and which is porous. In addition, it has been found that when the porous silicon carbide composite material and a dispersion having dispersed a colloid containing a precious metal are mixed with each other, a domain containing a silicon oxide in part of the porous silicon carbide composite material is formed, obtaining an electrode catalyst containing particles containing a precious metal. Further, it has been found that when solids of the above-mentioned mixture are dried in an oxygen gas atmosphere to form a silicon oxide in part of the porous silicon carbide composite material, a site of the silicon carbide which is likely to suffer deterioration is oxidized in advance, and thus the porous silicon carbide composite material is stabilized, and further a sacrificial effect due to carbon (C) contained in a very small amount is obtained, and, as a result, there can be provided an electrode catalyst which not only achieves high electrical conductivity while maintaining large BET specific surface area, but also has excellent durability.

Specifically, the present invention provides the following construction.

[1] An electrode catalyst including:

a porous silicon carbide composite material containing silicon carbide (SiC) and a carbon material (A), particles containing a precious metal and being supported on the porous silicon carbide composite material, and a domain containing a silicon oxide and being formed in part of the porous silicon carbide composite material, the electrode catalyst having a BET specific surface area of 10 $m^2$/g or more and having an electrical conductivity of 0.1 S/cm or more.

[2] An electrode catalyst including:

a porous silicon carbide composite material containing silicon carbide (SiC) and a carbon material (A), a carbon material (B), particles containing a precious metal and being supported on the porous silicon carbide composite material and/or the carbon material (B), and a domain containing a silicon oxide and being formed in part of the porous silicon carbide composite material, the electrode catalyst having a BET specific surface area of 10 $m^2$/g or more and having an electrical conductivity of 0.1 S/cm or more.

[3] The electrode catalyst according to item [1] or [2] above, in which the amount of the supported particles containing a precious metal is 10 to 60% by mass, based on the mass of the whole of the electrode catalyst as 100% by mass.

[4] The electrode catalyst according to any of items [1] to [3] above, in which the mass ratio of silicon (Si) to oxygen (O) contained in the electrode catalyst ([Si]/[O]) is 1/0.1 to 1/0.001.

[5] The electrode catalyst according to any of items [1] to [4] above, in which the mass ratio of silicon (Si) to carbon (C) contained in the electrode catalyst ([Si]/[C]) is 0.4/1.0 to 2.0/1.0.

[6] The electrode catalyst according to any of items [2] to [4] above, in which the mass ratio of silicon (Si) to carbon (C) contained in the electrode catalyst ([Si]/[C]) is 0.15/1.0 to 2.0/1.0.

[7] The electrode catalyst according to any of items [1] to [6] above, in which the content of the carbon material (A) is 5 to 50% by mass.

[8] The electrode catalyst according to any of items [2] to [6] above, in which the total content of the carbon materials (A) and (B) in the electrode catalyst is 5 to 50% by mass.

[9] The electrode catalyst according to any of items [1] to [8] above, in which the carbon material (A) and/or (B) contains one member or two or more members selected from carbon black, a carbon nanofiber, a carbon nanotube, and low-crystalline nanocarbon.

[10] The electrode catalyst according to any of items [1] to [9] above, in which the particle diameter ratio of the average diameter of primary particles of the silicon carbide (SiC) and the average diameter of the carbon material is 10:1 to 1:5.

[11] The electrode catalyst according to any of items [1] to [10] above, in which the particles containing a precious metal contain one member or two or more members selected from the group consisting of platinum (Pt), a platinum-cobalt alloy (PtCo), and a platinum-nickel alloy (PtNi).

[12] An electrode for a fuel cell, the electrode having a layer containing the electrode catalyst according to any of items [1] to [11] above.

[13] A fuel cell including the electrode for a fuel cell according to item [12] above.

[14] A method for producing an electrode catalyst, including the steps of:

(A) adding an organic alkoxysilane to an acidic aqueous solution containing a surfactant and a pH adjustor, and further adding a carbon material (A) or an organic polymer to cause a sol-gel reaction of the organic alkoxysilane, forming a gel containing the carbon material (A) or the organic polymer;
(B) cleaning the gel with an alcohol;
(C-1) drying the cleaned gel to form a porous silicon carbide precursor;
(D-1) calcining the porous silicon carbide precursor to obtain a porous silicon carbide composite material containing silicon carbide (SiC) and the carbon material (A); and
(E-1) mixing a dispersion containing a colloid containing a precious metal and an aqueous hydrogen peroxide solution with the porous silicon carbide composite material to obtain a mixture and to form a domain containing a silicon oxide in part of the porous silicon carbide composite material, obtaining an electrode catalyst including particles containing a precious metal.

[15] A method for producing an electrode catalyst, including the steps of:

(A) adding an organic alkoxysilane to an acidic aqueous solution containing a surfactant and a pH adjustor, and further adding a carbon material (A) or an organic polymer to cause a sol-gel reaction of the organic alkoxysilane, forming a gel containing the carbon material (A) or the organic polymer;
(B) cleaning the gel with an alcohol;
(C-1) drying the cleaned gel to form a porous silicon carbide precursor;
(D-1) calcining the porous silicon carbide precursor to obtain a porous silicon carbide composite material containing silicon carbide (SiC) and the carbon material (A); and
(E-1) mixing a dispersion containing a colloid containing a precious metal and an aqueous hydrogen peroxide solution with the porous silicon carbide composite material to obtain a mixture and to form a domain containing a silicon oxide in part of the porous silicon carbide composite material, obtaining an electrode catalyst including particles containing a precious metal,
the method further including any of the steps shown in the following items (1) to (4):

(1) step (C-2) of incorporating a carbon material (B) into the porous silicon carbide precursor obtained in the step (C-1);
(2) step (D-2) of incorporating a carbon material (B) into the porous silicon carbide composite material obtained in the step (D-1);
(3) step (E-2) of incorporating a carbon material (B) into the electrode catalyst including particles containing a precious metal obtained in the step (E-1); and
(4), after the step (E-1), step (F-1) of subjecting solids of the mixture to heat treatment in an oxygen gas atmosphere to cause the domain containing a silicon oxide formed in part of the porous silicon carbide to further grow, and step (F-2) of incorporating a carbon material (B) into the mixture obtained in the step (F-1).

[16] The method for producing an electrode catalyst according to item [14] or [15] above, which further includes, after the step (E-1) or (E-2), step (F-1) of subjecting solids of the mixture to heat treatment in an oxygen gas atmosphere to cause the domain containing a silicon oxide formed on the surface of the silicon carbide to further grow.

[17] The method for producing an electrode catalyst according to item [16] above, in which, in the step (F-1), the solids of the mixture are subjected to heat treatment at 100 to 800°C.

[18] The method for producing an electrode catalyst according to any of items [14] to [17] above, in which the organic alkoxysilane is represented by the following formula (1) or (2):

$$R^1\text{-}SiR^2_x(OR^3)_{3-x} \qquad (1)$$

wherein $R^1$ is any one group selected from a methyl group, an ethyl group, a vinyl group, and a phenyl group, $R^2$ represents a methyl group, $R^3$ represents a methyl group or an ethyl group, and integer x is 0 or 1,

$$R^4\text{-}(SiR^5_y(OR^6)_{3-y})_2 \qquad (2)$$

wherein $R^4$ includes any one group selected from a methylene group, an ethylene group, a hexylene group, a vinylene group, a phenylene group, and a biphenylene group, $R^5$ represents a methyl group, $R^6$ represents a methyl group or an ethyl group, and integer y is 0 or 1.

[19] The method for producing an electrode catalyst according to any of items [14] to [18] above, in which the carbon material (A) and/or (B) contains one member or two or more members selected from carbon black, a carbon nanofiber, a carbon nanotube, and low-crystalline nanocarbon.

[20] The method for producing an electrode catalyst according to any of items [14] to [19] above, in which the colloid containing a precious metal contains one member or two or more members selected from the group consisting of a platinum (Pt) colloid, a platinum-cobalt (PtCo) colloid, and a platinum-nickel (PtNi) colloid.

ADVANTAGEOUS EFFECTS OF INVENTION

In the present invention, there can be provided an electrode catalyst which not only achieves high electrical conductivity while maintaining large BET specific surface area, but also has excellent durability. Further, there can be provided a method for producing an electrode catalyst using an organic alkoxysilane which is of such a type that it is widely being on the market as an industrial raw material.

BRIEF DESCRIPTION OF DRAWINGS

[FIG. 1] FIG. 1 is a flow chart explaining an example of the method for producing an electrode catalyst according to an embodiment of the present invention.
[FIG. 2] FIG. 2(A) and FIG. 2(B) are transmission electron microscope images of the electrode catalyst A in Example 1.
[FIG. 3] FIG. 3 is a diagram showing the results of cyclic voltammetry (CV) measurement with respect to the electrode catalyst A in Example 1.
[FIG. 4] FIG. 4 is a diagram showing a change of the electrochemical active surface area (ECSA) for the number of cycles of the CV measurement with respect to the electrode catalyst A in Example 1.

DESCRIPTION OF EMBODIMENTS

<Construction of the electrode catalyst>

The electrode catalyst according to the present embodiment includes any one of the below-described electrode catalyst (I) and electrode catalyst (II).

The electrode catalyst (I) includes a porous silicon carbide composite material containing silicon carbide (SiC) and a carbon material (A), particles containing a precious metal and being supported on the porous silicon carbide composite material, and a domain containing a silicon oxide and being formed in part of the porous silicon carbide composite material.

The electrode catalyst (II) includes a porous silicon carbide composite material containing silicon carbide (SiC) and a carbon material (A), a carbon material (B), particles containing a precious metal and being supported on the porous silicon carbide composite material and/or the carbon material (B), and a domain containing a silicon oxide and being formed in part of the porous silicon carbide composite material.

With respect to the form of the electrode catalyst (I) or (II), there is no particular limitation, but the electrode catalyst is, for example, in a powder form, a particle form, a fiber form, or a needle-like form, especially preferably in a powder form or a particle form.

When the electrode catalyst (I) or (II) is in a powder form or a particle form, there is no particular limitation with respect to the particle diameter of the electrode catalyst, but the particle diameter, in terms of a particle diameter $D_{50}$ which is a 50% cumulative particle size in volume-based cumulative particle size distribution, is preferably, for example, 0.1 to 50 $\mu$m, more preferably 0.1 to 10 $\mu$m, further preferably 0.1 to 2 $\mu$m.

The particle diameter $D_{50}$ of the electrode catalyst (I) or (II) means a value as measured in accordance with JIS Z8825-1:2013, for example, means a particle diameter $D_{50}$ as measured using a laser diffraction particle size distribution measurement apparatus (SALD-7000, manufactured by Shimadzu Corporation).

The electrode catalyst (I) or (II) of the present embodiment has a BET specific surface area of 10 $m^2$/g or more, preferably 50 $m^2$/g or more, more preferably 100 $m^2$/g or more. Further, the BET specific surface area of the electrode catalyst may be 300 $m^2$/g or less. When the BET specific surface area of the electrode catalyst is 10 $m^2$/g or more, the amount of the catalyst particles supported on the surface of the carrier is satisfactory, so that, when the electrode catalyst (I) or (II) is used in an electrode for a fuel cell, desired properties, such as power output and efficiency, can be obtained. On the other hand, when the BET specific surface area of the electrode catalyst is 300 $m^2$/g or less, the ratio of the mesopores suitable for supporting a catalyst is increased, making it possible to further improve the utilization of the catalyst particles.

The electrode catalyst (I) or (II) preferably has a total pore volume of 0.3 $cm^3$/g or more, more preferably 0.5 $cm^3$/g or more, especially preferably 0.6 $cm^3$/g or more. When the total pore volume of the electrode catalyst is 0.3 $cm^3$/g or more, the reacting gas and electrolyte can easily flow through the catalyst layer, making it possible to improve the catalytic efficiency.

The electrode catalyst (I) or (II) preferably has a pore size of 10 to 1,000 nm, more preferably 20 to 500 nm, especially preferably 50 to 300 nm. When the pore size of the electrode catalyst (I) or (II) is 10 to 1,000 nm, the reacting gas and electrolyte can easily flow through the catalyst layer, making it possible to improve the catalytic efficiency. Particularly, when the pore size of the porous silicon carbide composite material is 10 nm or more, supply of the reacting gas and electrolyte to the supported catalyst particles is stabilized, making it possible to suppress a reduction of the utilization of the catalyst particles.

The BET specific surface area, total pore volume, and pore size of the electrode catalyst (I) or (II) can be determined as values measured by a gas adsorption method, which mean values determined by, for example, using an isovolumetric method, while changing the relative pressure in the adsorption isotherm, causing adsorption of a non-corrosive gas, such as nitrogen or argon, and making a calculation from the adsorption amount and condensation of the non-corrosive gas.

[Porous silicon carbide composite material]

In the porous silicon carbide constituting the electrode catalyst (I) or (II), a plurality of micropores are individually formed due to the three-dimensional skeleton structure, or a plurality of micropores are formed in such a state that part of or all of the micropores are connected together. The BET specific surface area, total pore volume, and pore size of the porous silicon carbide composite material are the same as the BET specific surface area, total pore volume, and pore size of the electrode catalyst (I) or (II).

The electrode catalyst (I) or (II) of the present embodiment contains carbon constituting the three-dimensional skeleton structure of the porous silicon carbide (SiC) as a carrier, and, as carbon other than the carbon constituting the three-dimensional skeleton structure, a carbon material (A) supported on the porous silicon carbide.

In the present description, the porous silicon carbide indicates that silicon carbide is composed of spaces of a three-dimensional network structure in which silicon carbide is connected.

[Carbon material (A)]

The carbon material (A) is contained in each of the electrode catalysts (I) and (II). With respect to the carbon material (A), there is no particular limitation, but the carbon material (A) can contain, for example, one member or two or more members selected from carbon black, a carbon nanofiber, a carbon nanotube, and low-crystalline nanocarbon. Of these, in view of achieving high electrical conductivity, and from the viewpoint of the productivity, the carbon material (A) is preferably carbon black.

When the carbon material (A) contains carbon black, primary particles of the carbon material (A) preferably have an average diameter of 10 to 200 nm, more preferably 20 to 100 nm, further preferably 30 to 50 nm. When the average diameter of primary particles of the carbon material is 10 to 200 nm, excellent electrical conductivity can be achieved.

When the carbon material (A) contains a carbon nanofiber or a carbon nanotube, the carbon material (A) preferably has an average diameter of 10 to 200 nm, and further the carbon material (A) preferably has a length of 1 to 20 μm.

In the electrode catalyst (I), the content of the carbon material (A) in the porous silicon carbide composite material is preferably 5 to 50% by mass, more preferably 8 to 45% by mass, further preferably 10 to 40% by mass. When the content of the carbon material (A) in the porous silicon carbide composite material is 5 to 50% by mass, high electrical conductivity is achieved and further corrosion of carbon and the like are suppressed, making it possible to improve the durability in the catalyst cycle.

In the electrode catalyst (II), the content of the carbon material (A) in the porous silicon carbide composite material is preferably 1 to 40% by mass, more preferably 2 to 35% by mass, further preferably 4 to 30% by mass. When the content of the carbon material (A) in the porous silicon carbide composite material is 1 to 40% by mass, high electrical conductivity is achieved and further corrosion of carbon and the like are suppressed, making it possible to improve the durability in the catalyst cycle.

The form and size of the carbon material (A) held in the porous silicon carbide composite material can be actually measured from, for example, observation using a transmission electron microscope or a scanning electron microscope. Further, the average diameter of the primary particles can be determined from, for example, a microscope image by using software for image analysis particle size distribution measurement.

[Carbon material (B)]

The carbon material (B) is contained in the electrode catalyst (II). With respect to the carbon material (B), there is no particular limitation, but the carbon material (B) can contain, for example, one member or two or more members selected from carbon black, a carbon nanofiber, a carbon nanotube, and low-crystalline nanocarbon. Of these, in view of achieving high electrical conductivity, and from the viewpoint of the productivity, the carbon material (B) is preferably carbon black. Further, the carbon material (B) may be the same as the carbon material (A).

When the carbon material (B) contains carbon black, primary particles of the carbon material (B) preferably have an average diameter of 10 to 200 nm, more preferably 20 to 100 nm, further preferably 30 to 50 nm. When the average diameter of primary particles of the carbon material is 10 to 200 nm, excellent electrical conductivity can be achieved.

When the carbon material (B) contains a carbon nanofiber or a carbon nanotube, the carbon material (B) preferably has an average diameter of 10 to 200 nm, and further the carbon material (B) preferably has a length of 1 to 20 μm.

The content of the carbon material (B) in the electrode catalyst (II) is preferably 1 to 20% by mass, more preferably 3 to 15% by mass, further preferably 4 to 10% by mass. When the content of the carbon material (A) in the porous silicon carbide composite material is 1 to 20% by mass, high electrical conductivity is achieved and further corrosion of carbon and the like are suppressed, making it possible to improve the durability in the catalyst cycle.

The form and size of the carbon material (B) held in the electrode catalyst (II) can be actually measured from, for example, observation using a transmission electron microscope or a scanning electron microscope. Further, the average diameter of the primary particles can be determined from, for example, a microscope image by using software for image analysis particle size distribution measurement.

The total content of the carbon materials (A) and (B) in the electrode catalyst (II) is preferably 5 to 50% by mass, more preferably 8 to 45% by mass, further preferably 10 to 40% by mass. When the total content of the carbon materials (A) and (B) in the electrode catalyst (II) is 5 to 50% by mass, high electrical conductivity is achieved and further corrosion of carbon and the like are suppressed, making it possible to improve the durability in the catalyst cycle.

[Silicon carbide]

Primary particles of the silicon carbide in the porous silicon carbide composite material preferably have an average diameter of 20 to 800 nm, more preferably 30 to 500 nm, further preferably 40 to 300 nm. When the average diameter of primary particles of the silicon carbide is 20 to 800 nm, excellent voids can be advantageously obtained when an electrode is produced using the silicon carbide.

The particle diameter of the silicon carbide in the porous silicon carbide composite material can be actually measured from, for example, observation using a transmission electron microscope or a scanning electron microscope. Further, the average diameter of the primary particles can be determined from, for example, a microscope image by using software for image analysis particle size distribution measurement.

With respect to the ratio of the average diameter of primary particles of the silicon carbide and the average diameter of the carbon material (A) (SiC:carbon material (A)), there is no particular limitation, but the ratio is preferably 10:1 to 1:5, more preferably 5:1 to 1:3, especially preferably 2:1 to 1:2. When the ratio is in the above range, a catalyst layer containing the obtained electrode catalyst can exhibit more excellent mass transfer.

[Particles containing a precious metal]

The amount of the supported particles containing a precious metal is preferably 10 to 60% by mass, preferably 15 to 60% by mass, more preferably 30 to 60% by mass, based on the mass of the whole of the electrode catalyst (I) or (II) as 100% by mass. When the amount of the supported particles containing a precious metal is 10 to 60% by mass, the electrode catalyst exhibits excellent catalytic function and durability, and further a satisfactory silicon oxide can be formed in the porous silicon carbide composite material.

The amount of the supported particles containing a precious metal can be determined by, for example, subjecting the electrode catalyst (I) or (II) to alkali fusion, and then dissolving the fused catalyst in aqua regia, and diluting the resultant solution with ultrapure water and subjecting the solution to measurement by an inductively coupled plasma emission spectrometry method (ICP).

The particles containing a precious metal preferably contain, for example, one member selected from the group consisting of platinum (Pt), gold (Au), ruthenium (Ru), rhodium (Rh), palladium (Pd), iridium (Ir), a platinum-cobalt alloy (PtCo), a platinum-nickel alloy (PtNi), and a platinum-ruthenium alloy (PtRu). Of these, from the viewpoint of the high durability at high temperatures and high catalytic function, the particles containing a precious metal more preferably contain one member or two or more members selected from the group consisting of platinum (Pt), a platinum-cobalt alloy (PtCo), and a platinum-nickel alloy (PtNi), further preferably contain platinum (Pt) or a platinum-cobalt alloy (PtCo).

The particles containing a precious metal are preferably nanoparticles containing a precious metal. Primary particles of the particles containing a precious metal preferably have an average particle diameter of 2 to 10 nm, more preferably 2.5 to 7 nm, further preferably 3 to 5 nm. When the average particle diameter of primary particles of the particles containing a precious metal is 2 to 10 nm, even the particles using a small amount of a precious metal can exhibit excellent catalyst performance.

[Silicon oxide]

In the electrode catalyst (I) or (II) of the present embodiment, a domain containing a silicon oxide formed by oxidation of the silicon carbide (SiC) is formed in part of the porous silicon carbide composite material. Examples of silicon oxides include silicon monoxide (SiO) and silicon dioxide ($SiO_2$). With respect to the form of the domain, there is no particular limitation, but, for example, the domain is noncrystalline. The domain containing a silicon oxide is dispersed and disposed on the surface of the porous silicon carbide composite material. Further, it is preferred that the domain containing a silicon oxide is formed on the surface of the silicon carbide (SiC) in the porous silicon carbide composite material. This can suppress oxidation of the surface of the silicon carbide.

The mass ratio of silicon (Si) to carbon (C) contained in the electrode catalyst (I) or (II) ([Si]/[C]) can be in the appropriate range in the embodiment of each of the electrode catalysts (I) and (II).

In the electrode catalyst (I), the [Si]/[C] is preferably 0.4/1.0 to 2.0/1.0, more preferably 0.5/1.0 to 1.8/1.0, further preferably 0.7/1.0 to 1.7/1.0.

In the electrode catalyst (II), the [Si]/[C] is preferably 0.15/1.0 to 2.0/1.0, more preferably 0.2/1.0 to 1.8/1.0, further preferably 0.3/1.0 to 1.6/1.0.

When the mass ratio of silicon (Si) to carbon (C) ([Si]/[C]) is 0.4/1.0 to 2.0/1.0 or 0.15/1.0 to 2.0/1.0, high electrical conductivity is achieved and further corrosion of carbon and the like are suppressed, making it possible to improve the durability in the catalyst cycle. Particularly, in the electrode catalyst (II), when the [Si]/[C] is in the range of 0.15/1.0 to 2.0/1.0, voids exhibiting excellent mass transfer can be advantageously formed when an electrode for an electrode catalyst is produced using the silicon carbide. The carbon (C) in the mass ratio means a total of carbon constituting the three-dimensional skeleton structure of the porous silicon carbide and carbon in the carbon material supported on the porous silicon carbide.

The mass ratio of silicon (Si) to oxygen (O) contained in the electrode catalyst (I) or (II) ([Si]/[O]) is preferably 1/0.1 to 1/0.001, more preferably 1/0.1 to 1/0.005, further preferably 1/0.01 to 1/0.005. When the mass ratio of silicon (Si) ([Si]/[O]) is 1/0.1 to 1/0.001, a site of the silicon carbide which is likely to suffer deterioration is oxidized in advance, so that the porous silicon carbide composite material can be improved in stability.

The content of silicon (Si) in the electrode catalyst (I) or (II) can be determined by, for example, an inductively coupled plasma emission spectrometry method (ICP). Further, the content of carbon (C) can be determined by a high-frequency combustion-infrared absorption method, and the content of oxygen (O) can be determined by an inert-gas fusion-infrared absorption method.

[Properties of the electrode catalyst]

The electrode catalyst (I) or (II) of the present embodiment has an electrical conductivity of 0.1 S/cm or more, preferably 1 S/cm or more, more preferably 5 S/cm or more, further preferably 10 S/cm or more. Further, the electrical conductivity of the electrode catalyst may be 100 S/cm or less, may be 70 S/cm or less, and may be 50 S/cm or less. When the electrical conductivity of the porous silicon carbide is higher, excellent electrode catalyst for fuel cell can be provided, but, when the amount of the held carbon material which contributes to an improvement of the electrical conductivity is too high, corrosion of the carbon component is likely to proceed in the catalyst cycle, so that the durability becomes poor.

<Method for producing the electrode catalyst>

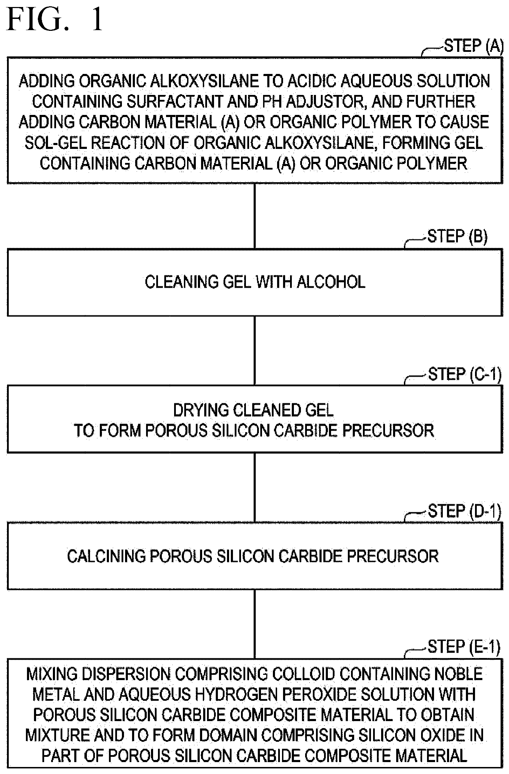

The method for producing the electrode catalyst (I) of the present embodiment includes, as shown in FIG. 1, the gel formation step (step (A)), cleaning step (step (B)), porous silicon carbide precursor formation step (step (C-1)), calcination step (step (D-1)), and mixing step (step (E-1)).

Further, the method for producing the electrode catalyst (II) of the present embodiment includes the gel formation step (step (A)), cleaning step (step (B)), porous silicon carbide precursor formation step (step (C-1)), calcination step (step (D-1)), and mixing step (step (E-1)), and further includes any of the steps shown in the following items (1) to (4):

(1) step (C-2) of incorporating a carbon material (B) into the porous silicon carbide precursor obtained in the step (C-1);
(2) step (D-2) of incorporating a carbon material (B) into the porous silicon carbide composite material obtained in the step (D-1);
(3) step (E-2) of incorporating a carbon material (B) into the electrode catalyst including particles containing a precious metal obtained in the step (E-1); and
(4), after the step (E-1), step (F-1) of subjecting solids of the mixture to heat treatment in an oxygen gas atmosphere to cause the domain containing a silicon oxide formed in part of the porous silicon carbide to further grow, and step (F-2) of incorporating a carbon material (B) into the mixture obtained in the step (F-1).

An additional step other than the above-mentioned steps may be provided before or after the individual step as long as the electrode catalyst of the present embodiment can be obtained.

[Step (A)]

In the step (A), for example, an organic alkoxysilane is added to an acidic aqueous solution containing a surfactant and a pH adjustor to cause a sol-gel reaction of the organic alkoxysilane, forming a gel. For example, hydrolyzation of the hydrolyzable organic alkoxysilane forms a hydrolyzate, and further the reaction system is increased in pH to cause a polycondensation reaction of the organic alkoxysilane, obtaining a polysilsesquioxane. The pH suitable for the polycondensation reaction varies depending on the isoelectric point of the organic alkoxysilane used, but, when the pH is too high, the reaction efficiency is likely to become poor, making it difficult to form a gel. The sol-gel reaction is preferably conducted at 25 to 80°C, more preferably at 30 to 70°C, further preferably at 40 to 60°C. Thus, a polysilsesquioxane can be obtained in the form of a wet gel containing therein water as a solvent.

The content of the surfactant in the acidic aqueous solution is preferably 0.1 to 50% by mass, more preferably 0.5 to 35% by mass, further preferably 2 to 15% by mass.

With respect to the surfactant, there is no particular limitation, but, for example, there can be mentioned a nonionic surfactant and/or a cationic surfactant. By appropriately selecting any one or both of a nonionic surfactant and a cationic surfactant and using it or them as the surfactant, a desired BET specific surface area and pore size can be obtained. Examples of nonionic surfactants include those of a polyethylene glycol type (an ether type and an ester-ether type) and those of a polyhydric alcohol type. Examples of polyethylene glycol-type nonionic surfactants include those of a Pluronic (registered trademark) type. Examples of cationic surfactants include those of an amine salt type and those of a quaternary ammonium salt type. When the content of the surfactant in the acidic aqueous solution is 0.1 to 50% by mass, a porous polysilsesquioxane gel having such large BET specific surface area that mesopores have developed can be formed.

The content of the pH adjustor in the acidic aqueous solution is preferably 5 to 50% by mass, more preferably 5.5 to 35% by mass, further preferably 6 to 23% by mass. When the content of the pH adjustor in the acidic aqueous solution is 5 to 50% by mass, a porous polysilsesquioxane gel having high skeletal strength and flexibility can be formed.

With respect to the pH adjustor, there is no particular limitation, but, for example, there can be mentioned a substance containing any one selected from urea, ammonia, and sodium hydroxide.

With respect to the acidic aqueous solution, there is no particular limitation, but there can be mentioned an aqueous solution of hydrochloric acid, nitric acid, acetic acid, or the like.

The organic alkoxysilane is preferably represented by the formula (1) or (2) below. By using the organic alkoxysilane represented by the formula (1) or (2) below, a porous silicon carbide having a desired three-dimensional skeleton structure can be easily formed.

$$R^1\text{-}SiR^2_x(OR^3)_{3-x} \qquad (1)$$

($R^1$ is any one group selected from a methyl group, an ethyl group, a vinyl group, and a phenyl group, $R^2$ represents a methyl group, $R^3$ represents a methyl group or an ethyl group, and integer x is 0 or 1)

$$R^4\text{-}(SiR^5_yOR^6)_{3-y})_2 \qquad (2)$$

($R^4$ includes any one group selected from a methylene group, an ethylene group, a hexylene group, a vinylene group, a phenylene group, and a biphenylene group, $R^5$ represents a methyl group, $R^6$ represents a methyl group or an ethyl group, and integer y is 0 or 1)

Specific examples of organic alkoxysilanes represented by the formula (1) above include methyltrimethoxysilane, methyltriethoxysilane, dimethyldimethoxysilane, ethyltrimethoxysilane, ethyltriethoxysilane, methylethyldimethoxysilane, vinyltrimethoxysilane, vinyltriethoxysilane, methylvinyldimethoxysilane, phenyltrimethoxysilane, phenyltriethoxysilane, and methylphenyldimethoxysilane. Further, specific examples of organic alkoxysilanes represented by the formula (2) above include bis(trimethoxysilyl)methane, bis(triethoxysilyl)methane, bis(methyldimethoxysilyl)methane, bis(methyldiethoxysilyl)methane, 1,2-bis(trimethoxysilyl)ethane, 1,2-bis(triethoxysilyl)ethane, 1,2-bis(methyldimethoxysilyl)ethane, 1,2-bis(methyldiethoxysilyl)ethane, 1,6-bis(trimethoxysilyl)hexane, 1,6-bis(triethoxysilyl)hexane, 1,6-bis(methyldimethoxysilyl)hexane, 1,6-bis(methyldiethoxysilyl)hexane, 1,2-bis(trimethoxysilyl)ethene, 1,2-bis(triethoxysilyl)ethene, 1,2-bis(methyldimethoxysilyl)ethene, 1,2-bis(methyldiethoxysilyl)ethene, 1,4-bis(trimethoxysilyl)benzene, 1,4-bis(triethoxysilyl)benzene, 1,4-bis(methyldimethoxysilyl)benzene, 1,4-bis(methyldiethoxysilyl)benzene, 4,4'-bis(trimethoxysilyl)biphenyl, 4,4'-bis(triethoxysilyl)biphenyl, 4,4'-bis(methyldimethoxysilyl)biphenyl, and 4,4'-bis(methyldiethoxysilyl)biphenyl. With respect to the above-mentioned ethene derivatives, there are cis/trans geometrical isomers, but any of the isomers can be used.

In the step (A), a carbon material (A) or an organic polymer is further added to the acidic aqueous solution, forming a gel containing the carbon material (A) or the organic polymer. The carbon material (A) or organic polymer is added during a sol-gel reaction of the alkoxysilane, and therefore, after the precursor formed in the step (C) is calcined in the step (D), the nanoscale carbon material (A) can be disposed in a porous, three-dimensional structure skeleton, making it possible to impart excellent electrical conductivity to the porous silicon carbide which is inherently an insulator or a semiconductor. The organic polymer undergoes pyrolysis due to calcination conducted in the step (D) to form low-crystalline nanocarbon which is held in the porous silicon carbide, so that electrical conductivity can be imparted to the porous silicon carbide.

In the step (A), it is preferred that the carbon material (A) or organic polymer is added to the acidic aqueous solution so that the mass ratio of the carbon material (A) or organic polymer and the organic alkoxysilane becomes 2.5 to 50:97.5 to 50. Further, the mass ratio of the carbon material (A) or organic polymer and the organic alkoxysilane is more preferably 3 to 30:97 to 70, further preferably 5 to 20:95 to 80. When the mass ratio of the carbon material (A) or organic polymer and the organic alkoxysilane is in the above range, both larger BET specific surface area and higher electrical conductivity can be achieved. When the amount of the carbon material (A) or organic polymer added is equivalent to or smaller than the amount of the organic alkoxysilane added, separation from the sol-gel reaction system can be suppressed, promoting formation of a gel made of polysilsesquioxane.

With respect to the carbon material (A), there is no particular limitation, but the carbon material (A) can contain, for example, one member or two or more members selected from carbon black, a carbon nanofiber, a carbon nanotube, and low-crystalline nanocarbon. Of these, in view of achieving high electrical conductivity, and from the viewpoint of the productivity, the carbon material (A) is preferably carbon black.

With respect to the organic polymer, there is no particular limitation, but, for example, the organic polymer can contain one member or two or more members selected from a phenolic resin, polystyrene, and polydivinylbenzene.

[Step (B)]

In the step (B), the gel obtained in the step (A) above is cleaned with an alcohol. With respect to the alcohol used for cleaning, there is no particular limitation, but, for example, there can be mentioned methanol, ethanol, 1-propanol, and 2-propanol. By cleaning with an alcohol, the unnecessary surfactant is removed from the acidic aqueous solution, and further water in the acidic aqueous solution can be replaced by the alcohol. After cleaning with the alcohol, further the alcohol may be replaced by a hydrocarbon solvent, such as hexane or heptane. In the present step (B), water which is a high surface-tension solvent is replaced by an alcohol or hydrocarbon solvent which is a low surface-tension solvent, and, in the below-mentioned step (C) which is the drying step at ordinary room temperature under atmospheric pressure, shrinkage of the network can be suppressed, facilitating formation of a porous gel structure.

[Step (C-1)]

In the step (C-1), the cleaned gel is dried to form a porous silicon carbide precursor. Examples of drying methods in the step (C-1) include a method in which the gel is subjected to supercritical drying using carbon dioxide at 80°C under 14 MPa, a method in which the gel is dried at room temperature under atmospheric pressure, and a method in which the gel is subjected to vacuum drying at 20 to 80°C. Of these, preferred is a method in which the gel is dried at room temperature under atmospheric pressure in view of the low production cost and obtaining a porous silicon carbide precursor having such high density that mesopores have developed when a polysilsesquioxane having high skeletal strength and flexibility is formed.

[Step (C-2)]

The method for producing the electrode catalyst (II) may further include the step (C-2). In the step (C-2), a carbon material (B) is incorporated into the porous silicon carbide precursor obtained in the step (C-1). With respect to the carbon material (B) incorporated, there is no particular limitation, but the carbon material (B) can contain, for example, one member or two or more members selected from carbon black, a carbon nanofiber, a carbon nanotube, and low-crystalline nanocarbon. Of these, in view of achieving high electrical conductivity, and from the viewpoint of the productivity, the carbon material (A) is preferably carbon black.

The carbon material (B) used in the step (C-2) and the carbon material (A) used in the step (A) may be the same or different, but are preferably the same from the viewpoint of the production cost.

The method for incorporating the carbon material (A) may be in accordance with a conventionally known method, and examples include simply mixing a powder, mechanical mixing using a pulverizer, a mixer, or the like, and mixing using a mortar or the like. In this instance, the obtained mixture may be in any of a dry state and a wet state, but is preferably in a dry state from the viewpoint of the cost.

With respect to the amount of the incorporated carbon material (B), there is no particular limitation, but the carbon material (B) is preferably incorporated so that the [Si]/[C] in the electrode catalyst (II) obtained after calcination becomes 0.4/1.0 to 2.0/1.0.

[Step (D-1)]

In the step (D-1), the porous silicon carbide precursor containing the carbon material (A) or organic polymer is calcined to obtain a porous silicon carbide composite material. In this step, calcination supplies carbon atoms from the organic group of the polysilsesquioxane and causes a carbon thermal reduction reaction to form a silicon carbide skeleton, and, on the other hand, carbon atoms are also supplied to the skeleton from the nanoscale carbon material (A) or organic polymer dispersed in the gel. The organic polymer undergoes pyrolysis due to calcination to form low-crystalline nanocarbon which is held in the porous silicon carbide.

The calcination can be conducted by a method which is known and commonly used, and is not particularly limited, but, for example, calcination is conducted by increasing the temperature by 2.5°C per minute in an inert gas atmosphere and maintaining the highest temperature in the temperature increase for a predetermined time. The highest temperature for calcination is preferably 1,300 to 3,000°C, further preferably 1,350 to 2,500°C, especially preferably 1,400 to 2,000°C. The time of maintaining the highest temperature may be appropriately selected using an effective time for obtaining the porous silicon carbide composite material as a yardstick, and, as an example, the time is preferably 5 minutes to 16 hours, further preferably 10 minutes to 10 hours, especially preferably 30 minutes to 3 hours. The calcination may be conducted in two or more stages. Specifically, on the first stage, calcination is conducted at a temperature lower than the highest temperature for a predetermined time, and then the temperature is increased and calcination can be conducted at that temperature. The calcination may be calcination under atmospheric pressure.

Examples of inert gases include nitrogen, helium, and argon. The inert gas may contain a reducing gas, such as hydrogen gas.

The calcination can be conducted using a carbonization furnace of a fixed bed or fluidized bed system, and, with respect to the heating system and type of the carbonization furnace, there is no particular limitation as long as it is a furnace having a function such that the temperature can be increased to a predetermined temperature. Examples of carbonization furnaces include a Riedhammer furnace, a tunnel furnace, and a single furnace.

In the present step (D-1), the carbon material (A) or organic polymer is further mixed into the porous silicon carbide precursor, and the resultant mixture can be calcined. When the organic polymer is mixed into the porous silicon carbide precursor in the step (D-1), the organic polymer undergoes pyrolysis due to calcination like in the case where the organic polymer is mixed in the step (A), forming low-crystalline nanocarbon which is held in the porous silicon carbide.

[Step (D-2)]

The method for producing the electrode catalyst (II) may further include the step (D-2). In the step (D-2), a carbon material (B) is incorporated into the porous silicon carbide composite material obtained in the step (D-1). With respect to the carbon material (B) incorporated, there is no particular limitation, but the carbon material (B) can contain, for example, one member or two or more members selected from carbon black, a carbon nanofiber, a carbon nanotube, and low-crystalline nanocarbon. Of these, in view of achieving high electrical conductivity, and from the viewpoint of the productivity, the carbon material (B) is preferably carbon black.

The carbon material (B) used in the step (D-2) and the carbon material (A) used in the step (A) may be the same or different, but are preferably the same from the viewpoint of the production cost.

The method for incorporating the carbon material (B) may be in accordance with a conventionally known method, and examples include simply mixing a powder, mechanical mixing using a pulverizer, a mixer, or the like, and mixing using a mortar or the like. In this instance, the obtained mixture may be in any of a dry state and a wet state, but is preferably in a dry state from the viewpoint of the cost.

With respect to the amount of the incorporated carbon material (B), there is no particular limitation, but the carbon material (B) is preferably incorporated so that the [Si]/[C] in the electrode catalyst (II) obtained after calcination becomes 0.15/1.0 to 2.0/1.0.

[Step (E-1)]

In the step (E-1), a dispersion containing a colloid containing a precious metal and an aqueous hydrogen peroxide solution is mixed with the porous silicon carbide composite material to obtain a mixture and to form a domain containing a silicon oxide in part of the porous silicon carbide composite material, obtaining an electrode catalyst including particles containing a precious metal. The colloid containing a precious metal has particles containing a precious metal dispersed in a liquid, and the dispersion containing a colloid containing a precious metal is a solution containing the colloid containing a precious metal and an aqueous hydrogen peroxide solution. The colloid containing a precious metal and the dispersion containing the colloid containing a precious metal and an aqueous hydrogen peroxide solution can be prepared by a method which is known and commonly used.

With respect to the ratio of mixing the dispersion containing a colloid containing a precious metal and the porous silicon carbide composite material, for example, the dispersion and the porous silicon carbide composite material are mixed so that the amount of the supported precious metal preferably becomes 10 to 60% by mass, more preferably 20 to 55% by mass, further preferably 30 to 50% by mass, based on the mass of the whole of the electrode catalyst.

The colloid containing a precious metal preferably containes, for example, a colloid of one metal or two or more metals selected from the group consisting of platinum (Pt), gold (Au), ruthenium (Ru), rhodium (Rh), palladium (Pd), osmium (Os), and iridium (Ir). Of these, the colloid containing a precious metal more preferably contains one member or two or more members selected from the group consisting of a platinum (Pt) colloid, a platinum-cobalt alloy (PtCo) colloid, and a platinum-nickel alloy (PtNi) colloid, further preferably contains a platinum (Pt) colloid or a platinum-cobalt alloy (PtCo) colloid.

In the present step (E-1), when a mixture of the dispersion containing a colloid containing a precious metal and an aqueous hydrogen peroxide solution and the porous silicon carbide composite material is stirred, the colloid containing a precious metal is supported and further a domain containing a silicon oxide on the surface of the silicon carbide is formed, obtaining an electrode catalyst containing particles containing a precious metal, and the mixture is allowed to stand for a predetermined period of time, forming a state in which a solid phase and a liquid phase are separated. From the viewpoint of the promotion of solid-liquid separation, the mixture may be cooled. Further, cleaning the solids can be conducted by a method which is known and commonly used under conditions which are known and commonly used. With respect to the cleaning liquid used in cleaning, there is no particular limitation, but, for example, the cleaning liquid is water, preferably ultrapure water. The cleaning removes ions, such as chloride ions, from the solids.

[Step (E-2)]

The method for producing the electrode catalyst (II) may further include the step (E-2). In the step (E-2), a carbon material (B) is incorporated into the electrode catalyst including particles containing a precious metal obtained in the step (E-1). With respect to the carbon material (B) incorporated, there is no particular limitation, but the carbon material (B) can contain, for example, one member or two or more members selected from carbon black, a carbon nanofiber, a carbon nanotube, and low-crystalline nanocarbon. Of these, in view of achieving high electrical conductivity, and from the viewpoint of the productivity, the carbon material (B) is preferably carbon black.

The carbon material (B) used in the step (E-2) and the carbon material (A) used in the step (A) may be the same or different, but are preferably the same from the viewpoint of the production cost.

The method for incorporating the carbon material (B) may be in accordance with a conventionally known method, and examples include simply mixing a powder, mechanical mixing using a pulverizer, a mixer, or the like, and mixing using a mortar or the like. In this instance, the obtained mixture may be in any of a dry state and a wet state, but is preferably in a dry state from the viewpoint of the cost.

With respect to the amount of the incorporated carbon material (B), there is no particular limitation, but the carbon material (B) is preferably incorporated so that the [Si]/[C] in the electrode catalyst (II) obtained after calcination becomes 0.15/1.0 to 2.0/1.0.

The method for producing the electrode catalyst (II) may have any one of the steps (C-2), (D-2), and (E-2), but, from the viewpoint of improving the performance of the obtained electrode catalyst, the method preferably has the step (D-2) or (E-2), especially preferably has the step (E-2). By virtue of having the step (D-2) or (E-2), the electrical conductivity can be improved while maintaining the durability of the obtained electrode catalyst.

[Step (F-1)]

The method for producing the electrode catalyst (I) or (II), if necessary, can further include the step of, after the step (E-1) or (E-2), subjecting solids of the mixture to heat treatment in an oxygen gas atmosphere to cause the domain containing a silicon oxide formed in part of the porous silicon carbide composite material to further grow (step (F-1)). Typically, solids of the mixture are subjected to heat treatment in an oxygen gas atmosphere to dry the solids of the mixture and further to cause the domain containing a silicon oxide formed on the surface of the silicon carbide to further grow, obtaining an electrode catalyst including particles containing a precious metal.

[Step (F-2)]

The method for producing the electrode catalyst (II) may further include the step (F-2). In the step (F-2), a carbon material (B) is incorporated into the mixture obtained in the step (F-1). With respect to the carbon material (B) incorporated, there is no particular limitation, but the carbon material (B) can contain, for example, one member or two or more members selected from carbon black, a carbon nanofiber, a carbon nanotube, and low-crystalline nanocarbon. Of these, in view of achieving high electrical conductivity, and from the viewpoint of the productivity, the carbon material is preferably carbon black.
The carbon material (B) used in the step (F-2) and the carbon material (A) used in the step (A) may be the same or different, but are preferably the same from the viewpoint of the production cost.
The method for incorporating the carbon material (B) may be in accordance with a conventionally known method, and examples include simply mixing a powder, mechanical mixing using a pulverizer, a mixer, or the like, and mixing using a mortar or the like. In this instance, the obtained mixture may be in any of a dry state and a wet state, but is preferably in a dry state from the viewpoint of the cost.
With respect to the amount of the incorporated carbon material (B), there is no particular limitation, but the carbon material (B) is preferably incorporated so that the [Si]/[C] in the electrode catalyst obtained after calcination becomes 0.15/1.0 to 2.0/1.0.
When the method has the step (F-2), the steps (C-2), (D-2), and (E-2) can be omitted.
The heat treatment for the solids can be conducted by a method which is known and commonly used under conditions which are known and commonly used, and is not particularly limited as long as the treatment is made in an oxygen gas atmosphere, but, for example, the heat treatment is conducted in air by increasing the temperature by 10°C per minute and maintaining the highest temperature in the temperature increase for a predetermined time. The temperature for the heat treatment is preferably 100 to 800°C, more preferably 200 to 750°C, further preferably 300 to 700°C. The time of maintaining the temperature for the heat treatment may be appropriately selected using an effective time for obtaining the electrode catalyst as a yardstick, and, as an example, the time is preferably 30 minutes to 4 hours, more preferably 40 minutes to 3 hours, further preferably 1 to 2 hours.
In the step (E-1), particles containing a precious metal are dispersed in and supported on the porous silicon carbide composite material. The particles containing a precious metal preferably containe, for example, one member or two or more members selected from the group consisting of platinum (Pt), gold (Au), ruthenium (Ru), rhodium (Rh), palladium (Pd), osmium (Os), and iridium (Ir), and, of these, from the viewpoint of the high durability at high temperatures and high catalytic function, the particles containing a precious metal more preferably contain one member or two or more members selected from the group consisting of platinum (Pt), a platinum-cobalt alloy (PtCo), and a platinum-nickel alloy (PtNi), further preferably contain platinum (Pt) or a platinum-cobalt alloy (PtCo). Further, it is preferred that nanoparticles containing a precious metal are supported on the porous silicon carbide composite material.
Further, in the step (E-1) or (E-2), part of silicon in the porous silicon carbide composite material is oxidized and changed to a silicon oxide, so that a domain containing the silicon oxide is formed on the surface and/or inside of the porous silicon carbide. Examples of silicon oxides include silicon monoxide (SiO) and silicon dioxide ($SiO_2$). With respect to the form of the domain, there is no particular limitation, but, for example, the domain may be noncrystalline.

[Electrode for a fuel cell and fuel cell]

The electrode for a fuel cell of the present embodiment has a catalyst layer containing the above-mentioned electrode catalyst. The electrode for a fuel cell typically has the electrode catalyst layer and a gas diffusion layer. The electrode for a fuel cell may be either a negative electrode (anode) for a fuel cell or a positive electrode (cathode) for a fuel cell. When the electrode for a fuel cell is a negative electrode for a fuel cell, the negative electrode for a fuel cell has an anode catalyst layer to which a fuel, such as hydrogen, is supplied, and a first gas diffusion layer. When the electrode for a fuel cell is a positive electrode for a fuel cell, the positive electrode for a fuel cell has a cathode catalyst layer to which an oxygen-containing gas, such as air, is supplied, and a second gas diffusion layer.
Further, the fuel cell of the present embodiment includes the above-mentioned electrode for a fuel cell. The fuel cell includes the electrode for a fuel cell and an electrolyte layer. Typically, the fuel cell has a negative electrode (anode) for a fuel cell, a positive electrode (cathode) for a fuel cell, an electrolyte layer disposed between the negative and positive electrodes, a first separator disposed on the opposite side to the electrolyte layer of the negative electrode for a fuel cell, and a second separator disposed on the opposite side to the electrolyte layer of the positive electrode for a fuel cell. In this structure, the anode catalyst layer is disposed between the electrolyte layer and the first gas diffusion layer, and the cathode catalyst layer is disposed between the electrolyte layer and the second gas diffusion layer.

The electrode for a fuel cell and the fuel cell have a catalyst layer including the above-mentioned electrode catalyst, and therefore can achieve high electrical conductivity while maintaining large BET specific surface area. In addition, a nanoscale carbon material is disposed in the silicon carbide having a porous, three-dimensional structure skeleton, and hence possibility of oxidative deterioration of the carbon material, for example, in an environment at a high temperature and at a high humidity, which is a conventional problem, can be reduced, and therefore the electrode for a fuel cell and the fuel cell can achieve excellent durability.

EXAMPLES

Hereinbelow, the Examples of the present invention will be described. The following Examples should not be construed as limiting the scope of the present invention.

(Example 1)

[Synthesis of a porous silicon carbide composite material]

Six grams of a 5 mM aqueous solution of acetic acid (manufactured by Kanto Chemical Co., Inc.), 0.8 g of Pluronic (registered trademark) F-127 (manufactured by BASF AG), 0.5 g of urea (manufactured by Kanto Chemical Co., Inc.), and 0.24 g of ketjen black (product name "ECP-600JD", manufactured by Lion Specialty Chemicals Co., Ltd.) were placed in a vial and stirred at room temperature for 10 minutes. Five grams of methyltrimethoxysilane (manufactured by Kanto Chemical Co., Inc.) was added to the vial, and the resultant mixture was stirred at room temperature for 30 minutes. Then, the mixture was subjected to reaction at 60°C for 4 days, obtaining a wet gel. The obtained wet gel was cleaned with methanol (manufactured by Kanto Chemical Co., Inc.), and dried at room temperature under atmospheric pressure for 3 days, and then further dried at 80°C under atmospheric pressure for 6 hours, obtaining 3.5 g of a porous silicon carbide precursor. One gram of the obtained porous silicon carbide precursor and 0.4 g of ketjen black (ECP) were mixed and then charged into a tube furnace, and subjected to calcination in an argon gas atmosphere under conditions such that the temperature was increased to 1,500°C at a temperature increase rate of 2.5°C/minute and that temperature was maintained for 2 hours, obtaining a porous silicon carbide composite material.

[Synthesis of an electrode catalyst containing platinum nanoparticles]

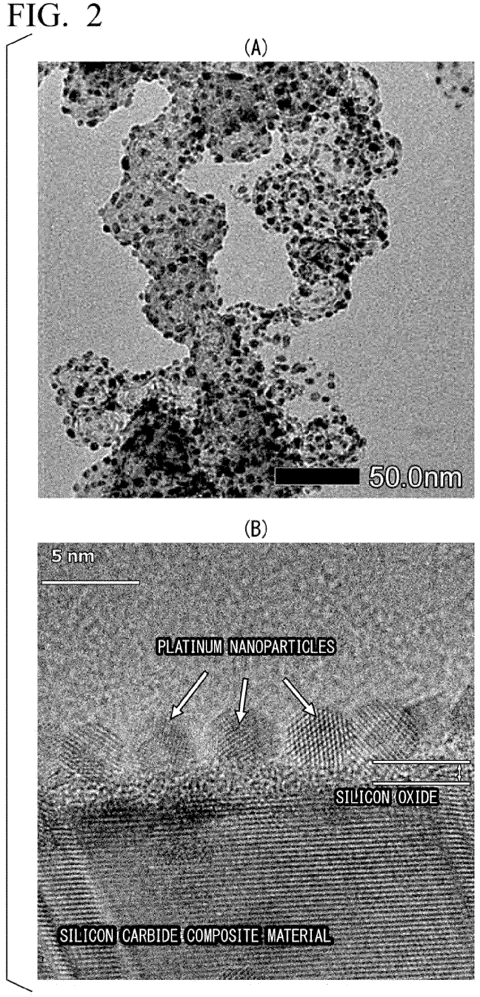

0.43 g of hexachloroplatinic acid hexahydrate was dissolved in 60 mL of ultrapure water, and 3.1 g of sodium hydrogensulfite was added to the resultant solution to cause a reduction reaction to proceed, and then 280 mL of ultrapure water was added to dilute the reaction mixture. Then, a 5% aqueous solution of sodium hydroxide was added, and, while adjusting the pH to about 5, 24 mL of 35% hydrogen peroxide was dropwise added to obtain a dispersion containing platinum colloid. Subsequently, the colloidal dispersion was fractionated in such an amount that the amount of the platinum (Pt) supported on the carrier became 40% by mass, based on the mass of the whole of the electrode catalyst including the carrier, and 0.4 g of the porous silicon carbide composite material was added as a carrier to the dispersion and mixed at 90°C for 3 hours. After cooling, the resultant mixture was subjected to solid-liquid separation, and the obtained powder (solids) was well cleaned with ultrapure water for removing chloride ions from the powder, and then dried in air at 80°C for 12 hours, obtaining an electrode catalyst A having platinum supported on the surface of the porous silicon carbide composite material. Transmission electron microscope images of the electrode catalyst A are shown in FIG. 2(A) and FIG. 2(B). It was found that platinum nanoparticles having a particle diameter of about 3 nm were supported on the porous silicon carbide composite material. Further, it was found that a domain containing a silicon oxide was formed on the surface of the silicon carbide (SiC) in the porous silicon carbide composite material.

(Example 2)

An electrode catalyst B was obtained in substantially the same manner as in Example 1 except that the colloidal dispersion was fractionated in such an amount that the amount of the platinum (Pt) supported on the carrier became 37% by mass, based on the mass of the whole of the electrode catalyst including the carrier.

(Example 3)

An electrode catalyst C was obtained in substantially the same manner as in Example 1 except that the colloidal dispersion was fractionated in such an amount that the amount of the platinum (Pt) supported on the carrier became 30% by mass, based on the mass of the whole of the electrode catalyst including the carrier.

(Example 4)

An electrode catalyst D was obtained in substantially the same manner as in Example 1 except that the colloidal dispersion was fractionated in such an amount that the amount of the platinum (Pt) supported on the carrier became 20% by mass, based on the mass of the whole of the electrode catalyst including the carrier.

(Example 5)

An electrode catalyst E was obtained in substantially the same manner as in Example 4 except that, in the synthesis of electrode catalyst, the obtained powder (solids) was calcined in an air flow at 600°C for 2 hours.

(Example 6)

A catalyst F was obtained in substantially the same manner as in Example 4 except that, in the synthesis of porous silicon carbide composite material, the amount of the ketjen black (ECP) mixed into 1 g of the porous silicon carbide precursor was changed to 0.25 g.

(Example 7)

A catalyst G was obtained in substantially the same manner as in Example 4 except that, in the synthesis of porous silicon carbide composite material, the amount of the ketjen black (ECP) mixed into 1 g of the porous silicon carbide precursor was changed to 0.7 g.

(Example 8)

A catalyst H was obtained in substantially the same manner as in Example 1 except that, in the synthesis of porous silicon carbide precursor, 2.5 g of methyltrimethoxysilane (manufactured by Kanto Chemical Co., Inc.) and 2.5 g of phenyltrimethoxysilane (manufactured by Kanto Chemical Co., Inc.) were used, and that, in the synthesis of porous silicon carbide composite material, calcination was conducted at 1,400°C.

(Comparative Example 1)

An electrode catalyst I was obtained in substantially the same manner as in Example 4 except that, in the synthesis of porous silicon carbide composite material, 1 g of the porous silicon carbide precursor was calcined without using ketjen black (ECP) mixed into the porous silicon carbide precursor.

(Comparative Example 2)

A catalyst J was obtained in substantially the same manner as in Example 8 except that, in the synthesis of porous silicon carbide composite material, calcination was conducted at 1,600°C, and that, in the synthesis of electrode catalyst, the colloidal dispersion was fractionated in such an amount that the amount of the platinum (Pt) supported on the carrier became 35% by mass, based on the mass of the whole of the electrode catalyst including the carrier.

With respect to the above-mentioned Examples 1 to 8 and Comparative Examples 1 and 2, measurement was conducted in accordance with the methods described below.

[Measurement of a carbon material content]

A carbon material content was determined from a weight loss measured by a thermogravimetric differential thermal analysis (TG-DTA) in air in the range temperature of from 600 to 800°C.

[Elemental analysis for the porous silicon carbide composite material]

Carbon (C) analysis: An analysis was conducted by a high-frequency combustion-infrared absorption method.

Apparatus: model CS844, manufactured by LECO Japan Corporation Oxygen (O) analysis: An analysis was conducted by an inert-gas fusion-infrared absorption method.
Apparatus: model TCH600, manufactured by LECO Japan Corporation Silicon (Si) analysis: A sample was fused and decomposed using sodium hydroxide and sodium peroxide, and then the fused sample was dissolved in hydrochloric acid and diluted with ultrapure water so as to have a predetermined volume, obtaining a solution to be tested, and the solution was subjected to ICP detection.
Apparatus: model ICPE-9820, manufactured by Shimadzu Corporation
From the Si, C, and O contents, the mass ratios [Si]/[C] and [Si]/[O] were determined.

[Measurement of an average diameter of primary particles]

The porous silicon carbide composite material powder was fixed on a carbon tape and, from an image of the powder obtained by observation using a scanning electron microscope, primary particle diameters of the silicon carbide and carbon material were measured, and an average of the values of primary particle diameters of 50 particles was determined as an average diameter of primary particles. From the obtained average diameters of primary particles, the average diameter ratio of the primary particles of the silicon carbide and the carbon material was calculated.

[Measurement of a BET specific surface area, a pore volume, and a pore size]

0.04 g of the porous silicon carbide composite material powder was weighed and placed in a sample tube, and subjected to pretreatment by vacuum drying at 100°C for 6 hours. After the pretreatment, using a specific surface area/pore distribution apparatus (apparatus name "BELSORP-miniII", manufactured by MicrotracBEL Corp.), nitrogen was adsorbed on the sample at -196°C while changing the relative pressure.

[Measurement of an electrical conductivity]

The electrode catalyst or catalyst powder was introduced into a powder resistivity measurement system (apparatus name "MCP-PD51", manufactured by Mitsubishi Chemical Analytech Co., Ltd.), and the sample was pressurized using the attached hydraulic pump, and, after the pressure had reached 12 kN, a resistivity was measured by a resistivity meter (apparatus name "Loresta GX", manufactured by Mitsubishi Chemical Analytech Co., Ltd.), and an electrical conductivity was calculated from the resistivity using the formula shown below. In Example 1, the resistivity was $6.6 \times 10^{-2}$ $\Omega\bullet$cm, and the electrical conductivity was 15 S/cm. The results of the measurement are shown in Table 1.

$$\text{Electrical conductivity (S/cm)} = (\text{Resistivity } (\Omega\bullet\text{cm}))^{-1}$$

[Measurement of an amount of the supported Pt]

The electrode catalyst was subjected to alkali fusion using anhydrous sodium carbonate and sodium peroxide, and then dissolved in aqua regia, and diluted with ultrapure water so as to have a prescribed concentration and subjected to measurement according to an inductively coupled plasma emission spectrometry method (ICP; model ICPE-9820, manufactured by Shimadzu Corporation), determining an amount of the supported Pt.

[Evaluation of catalyst performance using a rotating electrode]

(Preparation of an electrode)

A glassy carbon (GC) electrode having a diameter of 5 mm was polished using an alumina paste, and then subjected to ultrasonic cleaning using ultrapure water. The electrode catalyst A was added to a 99% by volume aqueous ethanol solution and dispersed using an ultrasonic homogenizer. The resultant dispersion was dropwise applied onto the GC disc, and dried at ordinary room temperature for 12 h. After drying, a 5% Nafion (registered trademark) solution was dropwise applied onto the electrode catalyst on the GC so that the thickness of the dried film became 50 nm, and dried at ordinary room temperature for 12 hours.

(CV Measurement)

Electrode evaluation was performed using an electrochemical measurement system (HZ-5000, manufactured by Hokuto Denko Corporation). A 0.1 M aqueous solution of perchloric acid was purged with nitrogen gas for 30 minutes, and then, using a reversible hydrogen electrode (RHE) as a reference electrode, cleaning was conducted 50 times in the potential range of 0.05 to 1.2 V at a sweep rate of 150 mV/s. Then, cyclic voltammetry (CV) measurement was conducted in the potential range of 0.05 to 1.0 V at a sweep rate of 100 mV/s. An analysis of the electrochemical active surface area (ECSA) was made using the adsorption wave of hydrogen seen at 0.4 V or less.

(Evaluation of oxygen reduction activity)

An electrolytic solution was purged with oxygen gas for one hour or longer, and then linear sweep voltammetry (LSV) was performed. Data was obtained under 8 types of conditions in total such that the temperature was 25°C, the potential range was from 0.25 to 1.00 V, the sweep rate was 5 mV/s, and the rotational speed was changed from 1,000 to 2,750 rpm and increased by 250 rpm. The obtained results were analyzed using a Koutecky-Levich plot, and a value of mass activity (A/g-Pt) at 0.85 V was obtained.

(Evaluation of start/stop durability)

The above-mentioned electrolytic solution was purged with nitrogen gas for 30 minutes, and then sweep was performed 500 times in the potential range of 1.0 to 1.5 V, and CV measurement was conducted in the potential range of 0.05 to 1.0 V. This procedure of the measurement was taken as one cycle, and 56,000 cycles were made as a test. The results are shown in Table 1.

[Table 1]

| | Catalyst | [Si]/[C] (Mass ratio) | [Si]/[O] (Mass ratio) | Average diameter ratio of SiC/C primary particles | BET Specific surface area $(m^2/g)$ | Electrical conductivity (S/cm) | Amount of supported Pt (% By mass) | ECSA $(m^2/g)$ | Mass activity A/g-Pt @0.85 V | ECSA Maintaining ratio (%) |
|---|---|---|---|---|---|---|---|---|---|---|
| Example 1 | Electrode catalyst A | 1/1.3 | 1/0.009 | 6 | 103 | 15 | 40 | 55 | 450 | 82 |
| Example 2 | Electrode catalyst B | 1/1.3 | 1/0.009 | 6 | 103 | 15 | 37 | 55 | 420 | 80 |
| Example 3 | Electrode catalyst C | 1/1.3 | 1/0.009 | 6 | 103 | 15 | 30 | 70 | 500 | 80 |
| Example 4 | Electrode catalyst D | 1/1.3 | 1/0.009 | 6 | 103 | 15 | 20 | 85 | 480 | 81 |
| Example 5 | Electrode catalyst E | 1/1.3 | 1/0.045 | 9 | 70 | 5 | 20 | 75 | 400 | 85 |
| Example 6 | Electrode catalyst F | 1/0.7 | 1/0.009 | 5 | 250 | 3 | 20 | 80 | 410 | 83 |
| Example 7 | Electrode catalyst G | 1/2.0 | 1/0.01 | 7 | 130 | 22 | 20 | 82 | 430 | 75 |
| Example 8 | Electrode catalyst H | 1/14 | 1/0.009 | 0.8 | 210 | 14 | 45 | 58 | 480 | 84 |
| Comparative Example 1 | Electrode catalyst I | 1/0.45 | 1/0.01 | 8.8 | 15 | $4.0 \times 10^{-7}$ | 20 | 78 | 420 | 85 |
| Comparative Example 2 | Electrode catalyst J | 1/1.4 | 1/0.009 | 13 | 120 | 19 | 35 | 15 | 120 | 70 |

EP 4 683 005 A1

As can be seen from Table 1, in Examples 1 to 8, the electrode catalysts A to H had a BET specific surface area of 10 $m^2$/g or more and an electrical conductivity of 0.1 S/cm or more, and it was found that the electrode catalysts in these Examples exhibited high electrical conductivity while maintaining large BET specific surface area. Further, in Examples 1 to 7, the ECSA maintaining ratio was 75% or more, and it was found that the electrode catalysts in these Examples exhibited excellent durability. Furthermore, the mass activity was 400 (A/g-Pt) or more, and the current per unit mass of platinum (Pt) was high, and it was found that the electrode catalysts exhibited high oxygen reduction activity.

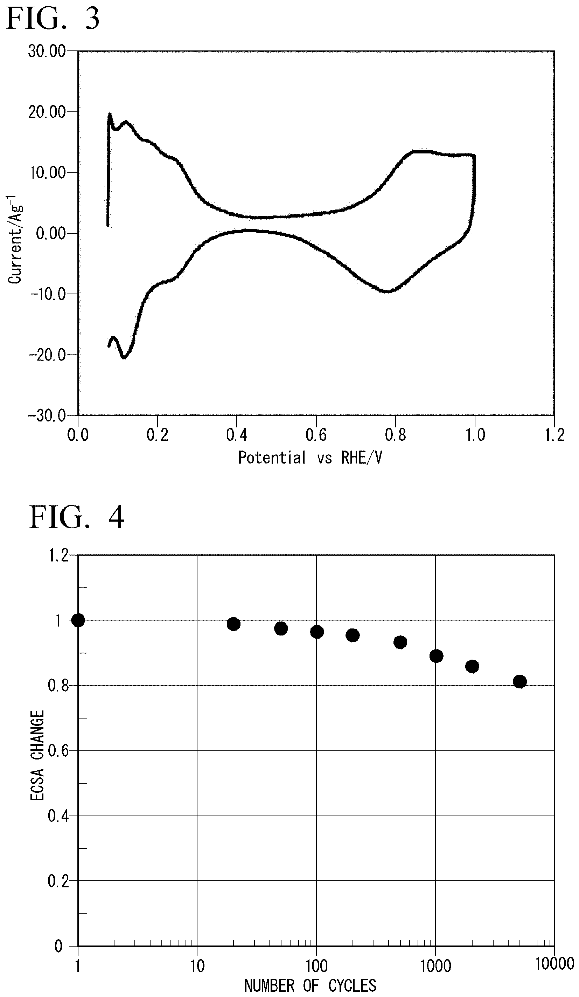

As an example, the results of the CV measurement with respect to the electrode catalyst A in Example 1 are shown in FIG. 3. The current value in each measurement cycle was constant. Further, with respect to the electrode catalyst A in Example 1, a change of the ECSA for the number of cycles of the measurement is shown in FIG. 4. From the evaluation for up to 8,000 cycles, a lowering of the ECSA was found to be about 20% or less of the initial value, and thus it was found that deterioration of the electrode catalyst A was small and the electrode catalyst A had high potential stability.

In contrast, in Comparative Example 1, the BET specific surface area was 15 $m^2$/g and the ECSA maintaining ratio was 85%, but the electrical conductivity was 4.0 x $10^{-7}$ S/cm, and thus the electrical conductivity was poor. Further, in Comparative Example 2, the average primary particle diameter ratio of the silicon carbide and the carbon material was as large as 13, and the BET specific surface area was 120 $m^2$/g and the electrical conductivity was 19 S/cm, but the ECSA maintaining ratio and the mass activity were considerably poor.

(Example 9)

[Preparation of a fuel cell unit cell]

(Preparation of an anode catalyst ink)

0.45 g of carbon black having platinum (Pt) supported thereon (Pt/CB, TEC 10E50E, manufactured by Tanaka Kikinzoku Kogyo K.K.; amount of the supported Pt: 46 wt%) and a polymer electrolyte (Nafion (registered trademark) DE521, manufactured by Du Pont Co.) were mixed so that the volume ratio became 1.0, and the resultant mixture, 2.5 g of ethanol, 2 g of water, and zirconia balls (diameter: 5 mm) were placed in a pot made of zirconia, and mixed using a planetary ball mill (P-6, manufactured by Fritsch Japan Co., Ltd.) for 60 minutes. Hereinafter, the mixture obtained by mixing using a ball mill is referred to as "anode catalyst ink".

(Preparation of a cathode catalyst ink)

The electrode catalyst A and a polymer electrolyte (Nafion (registered trademark) DE521, manufactured by Du Pont Co.) were mixed so that the volume ratio became 0.7, and the resultant mixture, 2.5 g of ethanol, 2 g of water, and zirconia balls (diameter: 5 mm) were placed in a pot made of zirconia, and mixed using a planetary ball mill (P-6, manufactured by Fritsch Japan Co., Ltd.) for 60 minutes.

(Preparation of a membrane electrode assembly (MEA))

An anode catalyst layer and a cathode catalyst layer were formed by applying, respectively, the anode catalyst ink and the cathode catalyst ink using a spray coating apparatus (manufactured by ACing Technologies Co., Ltd.) to a polymer electrolyte membrane (Nafion NR212, manufactured by Du Pont Co.) so that the platinum coating weight for the anode became 0.5 mg/$cm^2$ and the platinum coating weight for the cathode became 0.3 mg/$cm^2$.

The electrode membrane (CCM) for a fuel cell containing the anode catalyst layer or cathode catalyst layer and the polymer electrolyte membrane was subjected to hot pressing (at 140°C under a pressure of 2.86 kN) using a hot press (TCMD-2.5, manufactured by Toho Industrial Co., Ltd.) for 3 minutes.

Gas diffusion layers (GDL, 22BB, manufactured by SGL Caron Japan Ltd.) were stacked on both sides of each catalyst layer of the CCM, obtaining a membrane electrode assembly (MEA) in which the cathode catalyst layer and the anode catalyst layer are stacked on the polymer electrolyte membrane so that the catalyst layers face to each other.

A unit cell was assembled using the above-obtained MEA, and set in an electricity generation evaluation apparatus (manufactured by Panasonic Production Technology Co., Ltd.).

(Example 10)

A membrane electrode assembly (MEA) and a unit cell were obtained in substantially the same manner as in Example 8 except that the electrode catalyst C was used as a cathode catalyst.

(Example 11)

A membrane electrode assembly (MEA) and a unit cell were obtained in substantially the same manner as in Example 8 except that the electrode catalyst D was used as a cathode catalyst.

(Example 12)

A membrane electrode assembly (MEA) and a unit cell were obtained in substantially the same manner as in Example 9 except that an electrode catalyst K obtained by mixing ketjen black (ECP-600JD) in an amount of 5% by mass with the electrode catalyst A was used as a cathode catalyst.

(Comparative Example 3)

A membrane electrode assembly (MEA) and a unit cell were obtained in substantially the same manner as in Example 8 except that Pt/CB (TEC10E50E, manufactured by Tanaka Kikinzoku Kogyo K.K.; amount of the supported Pt: 46 wt%) was used as a cathode catalyst.

With respect to the above-mentioned Examples 9 to 12 and Comparative Example 3, measurement was conducted in accordance with the methods described below.

[Evaluation of fuel cell unit cell (80°C)]

(Measurement of I-V characteristics and a cell resistance)

With respect to each of the unit cells obtained in the Examples and Comparative Example, hydrogen gas was fed to the anode side and oxygen gas was fed to the cathode side. The flow rates of gases were set so that the utilization of the hydrogen gas became 70% and the utilization of the oxygen gas became 40%. The anode gas and the cathode gas were individually humidified using an external humidifier and then fed to the unit cell. Further, the temperature was controlled so that the temperature of the unit cell became 80°C, and the humidity of the fed gas was controlled so that the relative humidity became 80% RH. Electricity generation was made in such a range of the applied current that the voltage of the unit cell was not lower than 0.4 V, and initial performance prior to the start/stop durability test was evaluated.

(Measurement of start/stop durability)

With respect to the unit cell, hydrogen gas was introduced to the anode side and nitrogen gas was introduced to the cathode side, and a start/stop durability test was conducted at a temperature of 80°C and at a relative humidity of 80% RH with a potential width of 1.0 to 1.5 V, and a change of the electrochemical active surface area (ECSA) was measured. Using cyclic voltammetry (CV), sweep was performed 6 times at a temperature of 80°C and at a relative humidity of 80% RH with a sweep potential of 0.05 to 1.0 V, and an ECSA was determined using the hydrogen adsorption electrical quantity at the 6th sweep.

Further, after 5,000 cycles, I-V characteristics and a cell resistance were measured in the same manner as mentioned above. The results are shown in Table 2.

[Table 2]

| | Catalyst | I-V Characteristics V @0.8 V | I-V Characteristics after 5,000 cycles V @0.8 V | Cell resistance $m\Omega \cdot cm^2$ @0.8 V | Cell resistance after 5,000 cycles $m\Omega \cdot cm^2$ @0.8 V | ECSA Maintaining ratio (%) |
|---|---|---|---|---|---|---|
| Example 9 | Electrode catalyst A | 0.69 | 0.66 | 78 | 81 | 81 |
| Example 10 | Electrode catalyst C | 0.69 | 0.66 | 80 | 83 | 80 |
| Example 11 | Electrode catalyst D | 0.67 | 0.43 | 90 | 207 | 75 |
| Example 12 | Electrode catalyst K | 0.71 | 0.67 | 80 | 82 | 80 |

(continued)

|  | Catalyst | I-V Characteristics V @0.8 V | I-V Characteristics after 5,000 cycles V @0.8 V | Cell resistance $m\Omega \cdot cm^2$ @0.8 V | Cell resistance after 5,000 cycles $m\Omega \cdot cm^2$ @0.8 V | ECSA Maintaining ratio (%) |
|---|---|---|---|---|---|---|
| Comparative Example 3 | Pt/CB Catalyst | 0.68 | 0.53 | 85 | 114 | 55 |

As can be seen from Table 2, in Examples 9 to 12 in which the electrode catalysts A, C, and D were used as a cathode catalyst for the fuel cell unit cell, the ECSA maintaining ratio was 75% or more, and it was found that the fuel cell unit cells in these Examples exhibited excellent durability. Particularly, in Examples 9, 10, and 12, the respective initial cell voltages (I-V characteristics) at 0.8 $A/cm^2$ were 0.69 V, 0.69 V, and 0.71 V, and the respective cell resistances were 78 $m\Omega \cdot cm^2$, 80 $m\Omega \cdot cm^2$, and 80 $m\Omega \cdot cm^2$, whereas, after 5,000 cycles, the respective cell voltages (I-V characteristics) were 0.66 V, 0.66 V, and 0.67 V, and the respective cell resistances were 81 $m\Omega \cdot cm^2$, 83 $m\Omega \cdot cm^2$, and 82 $m\Omega \cdot cm^2$, and, from the above, it was found that changes of the I-V characteristics and the cell voltage between before and after the start/stop durability test were very small, and the fuel cell unit cells in these Examples exhibited more excellent durability. Pt particles have electrical conductivity, and there is a tendency that the Pt particles on the silicon carbide composite material (carrier) move and gradually suffer aggregation during the potential cycle test. In Examples 9, 10, and 12, the amount of the supported Pt (density of supported Pt) of the electrode catalyst A, C, or K is larger than that in Example 11, and it is considered that, in Examples 9, 10, and 12, the movement and aggregation of Pt was suppressed and the density of Pt on the carrier was increased and consequently, the cell resistance was reduced and the I-V characteristics were excellent, as compared to those in Example 11.

In contrast, in Comparative Example 1 in which a Pt/CB catalyst was used as a cathode catalyst for the fuel cell unit cell, the ECSA maintaining ratio was 55%, and the fuel cell unit cell had poor durability. Further, the initial cell voltage (I-V characteristics) at 0.8 $A/cm^2$ was 0.68 V, and the cell resistance was 85 $m\Omega \cdot cm^2$, whereas, after 5,000 cycles, the cell voltage (I-V characteristics) at 0.8 $A/cm^2$ was 0.53 V, and the cell resistance was 114 $m\Omega \cdot cm^2$, and changes of the I-V characteristics and the cell voltage between before and after the start/stop durability test were very large, and thus the fuel cell unit cell in the Comparative Example had poor durability, as compared to the fuel cell unit cells in Examples 8 and 9.

[Evaluation of fuel cell unit cell (120°)]

(Measurement of I-V characteristics and a cell resistance)

With respect to the unit cell obtained in Example 10, hydrogen gas was fed to the anode side and oxygen gas was fed to the cathode side. The flow rates of gases were set so that the utilization of the hydrogen gas became 70% and the utilization of the oxygen gas became 40%. The anode gas and the cathode gas were individually humidified using an external humidifier and then fed to the unit cell. Further, the temperature was controlled so that the temperature of the unit cell became 120°C, and the humidity of the fed gas was controlled so that the relative humidity became 80% RH, and the back pressure was set to 200 kPa. Electricity generation was made in such a range of the applied current that the voltage of the unit cell was not lower than 0.4 V. As a result, the cell voltage (I-V characteristics) at 0.8 $A/cm^2$ was 0.68 V, and the cell resistance was 76 $m\Omega \cdot cm^2$, and thus it was found that the unit cell exhibited excellent electricity generation performance even at a temperature as high as 120°C.

[Evaluation of fuel cell unit cell (80°C)]

(I-V Characteristics in the high load region)

With respect to each of the unit cells obtained in Examples 9 and 12 and Comparative Example 2, hydrogen gas was fed to the anode side and air was fed to the cathode side. The flow rates of gases were set so that the utilization of the hydrogen gas became 50% and the utilization of the air became 50%. The anode gas and the cathode gas were individually humidified using an external humidifier and then fed to the unit cell. Further, the temperature was controlled so that the temperature of the unit cell became 80°C, and the humidity of the fed gas was controlled so that the relative humidity became 80% RH, and the current density at 0.6 V was evaluated. As a result, the current density in Comparative Example 2 was 0.7 $A/cm^2$, whereas the current density in Example 9 was 0.8 $A/cm^2$ and that in Example 12 was 1.0 $A/cm^2$, and thus it was found that the unit cells in these Examples had very excellent performance in the high load region due to excellent mass transfer properties.

INDUSTRIAL APPLICABILITY

The electrode catalyst of the present embodiment not only achieves high electrical conductivity while maintaining large BET specific surface area, but also has excellent durability, and therefore is advantageously used as a material for an electrode for use in a catalyst layer for an electrode for a fuel cell. Particularly, the electrode catalyst copes with the wide range of operating temperature of from a conventional temperature (about 70°C) to a high temperature (120°C or higher), and can achieve a fuel cell having both excellent electricity generation performance and excellent durability, and therefore is expected to largely contribute to putting into practical use a fuel cell for commercial automobile, which is expected to be applied to a number of uses.

**Claims**

1. An electrode catalyst comprising:

   a porous silicon carbide composite material containing silicon carbide (SiC) and a carbon material (A),
   particles containing a precious metal and being supported on the porous silicon carbide composite material, and
   a domain containing a silicon oxide and being formed in part of the porous silicon carbide composite material,
   the electrode catalyst having a BET specific surface area of 10 m$^2$/g or more and having an electrical conductivity of 0.1 S/cm or more.

2. An electrode catalyst comprising:

   a porous silicon carbide composite material containing silicon carbide (SiC) and a carbon material (A),
   a carbon material (B),
   particles containing a precious metal and being supported on the porous silicon carbide composite material and/or the carbon material (B), and
   a domain containing a silicon oxide and being formed in part of the porous silicon carbide composite material,
   the electrode catalyst having a BET specific surface area of 10 m$^2$/g or more and having an electrical conductivity of 0.1 S/cm or more.

3. The electrode catalyst according to claim 1 or 2, wherein the amount of the supported particles containing a precious metal is 10 to 60% by mass, based on the mass of the whole of the electrode catalyst as 100% by mass.

4. The electrode catalyst according to claim 1 or 2, wherein the mass ratio of silicon (Si) to oxygen (O) contained in the electrode catalyst ([Si]/[O]) is 1/0.1 to 1/0.001.

5. The electrode catalyst according to claim 1, wherein the mass ratio of silicon (Si) to carbon (C) contained in the electrode catalyst ([Si]/[C]) is 0.4/1.0 to 2.0/1.0.

6. The electrode catalyst according to claim 2, wherein the mass ratio of silicon (Si) to carbon (C) contained in the electrode catalyst ([Si]/[C]) is 0.15/1.0 to 2.0/1.0.

7. The electrode catalyst according to claim 1, wherein the content of the carbon material (A) is 5 to 50% by mass.

8. The electrode catalyst according to claim 2, wherein the total content of the carbon materials (A) and (B) in the electrode catalyst is 5 to 50% by mass.

9. The electrode catalyst according to claim 1 or 2, wherein the carbon material (A) and/or (B) contains one member or two or more members selected from carbon black, a carbon nanofiber, a carbon nanotube, and low-crystalline nanocarbon.

10. The electrode catalyst according to claim 1 or 2, wherein the particle diameter ratio of the average diameter of primary particles of the silicon carbide (SiC) and the average diameter of the carbon material is 10:1 to 1:5.

11. The electrode catalyst according to claim 1 or 2, wherein the particles containing a precious metal contain one member or two or more members selected from the group consisting of platinum (Pt), a platinum-cobalt alloy (PtCo), and a platinum-nickel alloy (PtNi).

12. An electrode for a fuel cell, the electrode having a layer containing the electrode catalyst according to any one of claims 1 to 11.

13. A fuel cell comprising the electrode for a fuel cell according to claim 12.

14. A method for producing an electrode catalyst, comprising the steps of:

(A) adding an organic alkoxysilane to an acidic aqueous solution containing a surfactant and a pH adjustor, and further adding a carbon material (A) or an organic polymer to cause a sol-gel reaction of the organic alkoxysilane, forming a gel containing the carbon material (A) or the organic polymer;
(B) cleaning the gel with an alcohol;
(C-1) drying the cleaned gel to form a porous silicon carbide precursor;
(D-1) calcining the porous silicon carbide precursor to obtain a porous silicon carbide composite material containing silicon carbide (SiC) and the carbon material (A); and
(E-1) mixing a dispersion containing a colloid containing a precious metal and an aqueous hydrogen peroxide solution with the porous silicon carbide composite material to obtain a mixture and to form a domain containing a silicon oxide in part of the porous silicon carbide composite material, obtaining an electrode catalyst including particles containing a precious metal.

15. A method for producing an electrode catalyst, comprising the steps of:

(A) adding an organic alkoxysilane to an acidic aqueous solution containing a surfactant and a pH adjustor, and further adding a carbon material (A) or an organic polymer to cause a sol-gel reaction of the organic alkoxysilane, forming a gel containing the carbon material (A) or the organic polymer;
(B) cleaning the gel with an alcohol;
(C-1) drying the cleaned gel to form a porous silicon carbide precursor;
(D-1) calcining the porous silicon carbide precursor to obtain a porous silicon carbide composite material containing silicon carbide (SiC) and the carbon material (A); and
(E-1) mixing a dispersion containing a colloid containing a precious metal and an aqueous hydrogen peroxide solution with the porous silicon carbide composite material to obtain a mixture and to form a domain containing a silicon oxide in part of the porous silicon carbide composite material, obtaining an electrode catalyst including particles containing a precious metal,
the method further comprising any of the steps shown in the following items (1) to (4):

(1) step (C-2) of incorporating a carbon material (B) into the porous silicon carbide precursor obtained in the step (C-1);
(2) step (D-2) of incorporating a carbon material (B) into the porous silicon carbide composite material obtained in the step (D-1);
(3) step (E-2) of incorporating a carbon material (B) into the electrode catalyst including particles containing a precious metal obtained in the step (E-1); and
(4), after the step (E-1), step (F-1) of subjecting solids of the mixture to heat treatment in an oxygen gas atmosphere to cause the domain containing a silicon oxide formed in part of the porous silicon carbide to further grow, and step (F-2) of incorporating a carbon material (B) into the mixture obtained in the step (F-1).

16. The method for producing an electrode catalyst according to claim 14 or 15, which further comprises, after the step (E-1) or (E-2), step (F-1) of subjecting solids of the mixture to heat treatment in an oxygen gas atmosphere to cause the domain containing a silicon oxide formed in part of the porous silicon carbide to further grow.

17. The method for producing an electrode catalyst according to claim 16, wherein, in the step (F-1), the solids of the mixture are subjected to heat treatment at 100 to 800°C.

18. The method for producing an electrode catalyst according to claim 14 or 15,

wherein the organic alkoxysilane is represented by the following formula (1) or (2):

$$R^1\text{-}SiR^2_x(OR^3)_{3-x} \qquad (1)$$

wherein $R^1$ is any one group selected from a methyl group, an ethyl group, a vinyl group, and a phenyl group, $R^2$ represents a methyl group, $R^3$ represents a methyl group or an ethyl group, and integer x is 0 or 1,

$$R^4\text{-}(SiR^5_y(OR^6)_{3-y})_2 \qquad (2)$$

wherein $R^4$ includes any one group selected from a methylene group, an ethylene group, a hexylene group, a vinylene group, a phenylene group, and a biphenylene group, $R^5$ represents a methyl group, $R^6$ represents a methyl group or an ethyl group, and integer y is 0 or 1.

19. The method for producing an electrode catalyst according to claim 14 or 15, wherein the carbon material (A) and/or (B) contains one member or two or more members selected from carbon black, a carbon nanofiber, a carbon nanotube, and low-crystalline nanocarbon.

20. The method for producing an electrode catalyst according to claim 14 or 15, wherein the colloid containing a precious metal contains one member or two or more members selected from the group consisting of a platinum (Pt) colloid, a platinum-cobalt (PtCo) colloid, and a platinum-nickel (PtNi) colloid.

# FIG. 1

STEP (A)

ADDING ORGANIC ALKOXYSILANE TO ACIDIC AQUEOUS SOLUTION CONTAINING SURFACTANT AND PH ADJUSTOR, AND FURTHER ADDING CARBON MATERIAL (A) OR ORGANIC POLYMER TO CAUSE SOL-GEL REACTION OF ORGANIC ALKOXYSILANE, FORMING GEL CONTAINING CARBON MATERIAL (A) OR ORGANIC POLYMER

STEP (B)

CLEANING GEL WITH ALCOHOL

STEP (C-1)

DRYING CLEANED GEL TO FORM POROUS SILICON CARBIDE PRECURSOR

STEP (D-1)

CALCINING POROUS SILICON CARBIDE PRECURSOR

STEP (E-1)

MIXING DISPERSION COMPRISING COLLOID CONTAINING NOBLE METAL AND AQUEOUS HYDROGEN PEROXIDE SOLUTION WITH POROUS SILICON CARBIDE COMPOSITE MATERIAL TO OBTAIN MIXTURE AND TO FORM DOMAIN COMPRISING SILICON OXIDE IN PART OF POROUS SILICON CARBIDE COMPOSITE MATERIAL

# FIG. 2

(A)

(B)

## FIG. 3

## FIG. 4

## INTERNATIONAL SEARCH REPORT

<table>
<tr><td></td><td>International application No.<br><br>**PCT/JP2024/010242**</td></tr>
</table>

**A. CLASSIFICATION OF SUBJECT MATTER**

*H01M 4/86*(2006.01)i; *B01J 27/224*(2006.01)i; *B01J 37/08*(2006.01)i; *C01B 32/977*(2017.01)i; *H01M 4/88*(2006.01)i; *H01M 4/92*(2006.01)i; *H01M 4/96*(2006.01)i; *H01M 8/10*(2016.01)i

FI: H01M4/86 M; B01J27/224 M; B01J37/08; C01B32/977; H01M4/86 B; H01M4/88 K; H01M4/92; H01M4/96 B; H01M8/10 101

According to International Patent Classification (IPC) or to both national classification and IPC

**B. FIELDS SEARCHED**

Minimum documentation searched (classification system followed by classification symbols)

H01M4/86; B01J27/224; B01J37/08; C01B32/977; H01M4/88; H01M4/92; H01M4/96; H01M8/10

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2017/213057 A1 (SUMITOMO ELECTRIC INDUSTRIES, LTD.) 14 December 2017 (2017-12-14)<br>paragraphs [0011]-[0073], fig. 1-5 | 1-20 |
| A | CN 113735108 A (SICHUAN XINGYAO NEW ENERGY TECHNOLOGY CO., LTD.) 03 December 2021 (2021-12-03)<br>paragraphs [0029]-[0109], fig. 1 | 1-20 |
| A | JP 2023-009699 A (KABUSHIKI KAISHA TOYOTA CHUO KENKYUSHO) 20 January 2023 (2023-01-20)<br>paragraphs [0016]-[0107], fig. 1-5 | 1-20 |
| A | JP 2010-149008 A (TOYOTA JIDOSHA KABUSHIKI KAISHA) 08 July 2010 (2010-07-08)<br>paragraphs [0023]-[0081], fig. 1-7 | 1-20 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 May 2024** | **04 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/010242**

| Patent document cited in search report | | | Publication date (day/month/year) | Patent family member(s) | | | Publication date (day/month/year) |
|---|---|---|---|---|---|---|---|
| WO | 2017/213057 | A1 | 14 December 2017 | US paragraphs [0022]-[0132], fig. 1-5 | 2018/0374657 | A1 | |
| | | | | CN | 108369870 | A | |
| CN | 113735108 | A | 03 December 2021 | (Family: none) | | | |
| JP | 2023-009699 | A | 20 January 2023 | WO paragraphs [0016]-[0107], fig. 1-5 | 2023/282036 | A1 | |
| | | | | KR | 10-2024-0049546 | A | |
| | | | | CN | 117651690 | A | |
| JP | 2010-149008 | A | 08 July 2010 | (Family: none) | | | |

Form PCT/ISA/210 (patent family annex) (July 2022)

**EP 4 683 005 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2023041007 A
- JP 2023009699 A
- JP 2010149008 A
- JP 2011093756 A